# EUROPEAN PATENT APPLICATION

(11) **EP 0 858 743 A2**
(43) Date of publication of application: **19.08.1998**
(21) Application number: 98101593.6
(22) Date of filing: 30.01.1998
(51) Int. Cl.: A23L 1/304, A23L 1/172

(54) **Processes for extracting zinc rich mineral components from cereal germs**

(30) Priority: 14.02.1997 JP 30078/97
(71) Applicant: NISSHIN FLOUR MILLING CO., LTD., Chuo-ku, Tokyo (JP)
(72) Inventor: Motoi, Hirofumi, Nisshin Flour Milling Co., Ltd., Iruma-gun, Saitama-ken (JP); Suzuki, Yoshio, Nisshin Flour Milling Co., Ltd., Ohimachi, Iruma-gun, Saitama-ken (JP)
(74) Representative: Türk, Gille, Hrabal, Leifert

(57) **Abstract**

A process is disclosed for the preparation of a zinc rich mineral component from a cereal germ which comprises the steps of:
a) extracting the cereal germ with water at a temperature of 70°C or lower under an acid condition of pH 5.0 or lower,
b) precipitating the zinc rich mineral component dissolved in the extract solution as insolubles, and
c) recovering the precipitated insolubles. The zinc rich mineral components produced by the process are useful as a material for foods.

## Description

### FIELD OF THE INVENTION

This invention relates to processes for the preparation of zinc rich mineral components at high yield with industrial advantage, which are useful as the materials for baby foods, enteral foods, dietary supplements and the like.

### BACKGROUND OF THE INVENTION

The germs of cereals such as wheat, barley, rice, soybean, corn, milo, sunflower, etc. contain abundantly proteins of good quality; essential fatty acids incapable of synthesizing in vivo, such as linoleic acid; various vitamins such as vitamin B₁, B₂, B₆, nicotinic acid, pantothenic acid, etc.; and minerals such as K, Na, Ca, Mg, etc., and they have a very high nutritive value. Now, powders and flakes of cereal germs such as wheat germ and unpolished rice germ have been sold as foods, but they have poor availability for foods in respect of taste, eating quality or the like, thus leading to very limited use.

Thus, many attempts have been made to extract the above-mentioned useful components from cereal germs with no modification and use the extracts as foods.

As the processes for the extraction of germ components, Japanese Patent Kokai 48-1170 discloses a process of treating cereal germs with a protease and a koji enzyme complex at a temperature of 40-65°C and then with an amylase at a temperature of 70-95°C and Japanese Patent Kokoku 3-58703 discloses a process of treating cereal germs with an amylase at a temperature of 70-95°C and then with a protease at a temperature of 45-55°C. Japanese Patent Kokoku 55-1027 discloses a process of extracting germ components wherein cereal germs are extracted with hot water at a temperature of about 70°C or higher in the presence of amylase, the extract is boiled with no solid-liquid separation and the solid is separated from the liquid. However, those processes are directed to the techniques of extracting germ components containing vitamins, minerals or the like, in the form of their aqueous solution from cereal germs and do not teach the art of recovering zinc from germ components.

It was reported by David B Lyon in the American Journal of Clinical Nutrition 39: pp. 190-195 (1984) that in vitro studies were carried out on a range of cereal products of differing phytate (myoinositol hexaphosphate) content in order to examine how Ca, Mg, Cu and Zn present in cereals were absorbed by the stomach and small intestine. In this study, the solubility of mineral components extracted with hydrochloric acid from cereal products was studied after neutralizing the acid extract with bicarbonate. It is clearly shown that Ca becomes insoluble with the higher level of phytate in the solution, but the result of Zn is not as clear as that of Ca. With the addition of various reagents to the HCl extract, EDTA and citric acid provided the improved solubility of Zn, while lactose and ascorbic acid gave no substantial effect. Thus the behavior of Zn in the aqueous solution depends on various factors. However, the above reference does not teach the art of recovering Zn from cereal germs.

In such circumstances, there has been required a process for the manufacture of zinc rich mineral components from cereal germs at high yield and with industrial advantage.

### SUMMARY OF THE INVENTION

An object of the invention is to provide processes for the preparation of zinc rich mineral components from cereal germs at high yield and with industrial advantage.

Another object of the invention is to use the resultant zinc rich mineral components as the materials for baby foods, enteral foods, dietary supplements and the like.

Other objects and advantages of the invention will be apparent from the following description.

The present invention provides a process for the preparation of a zinc rich mineral component from a cereal germ which comprises the steps of:
a) extracting the cereal germ with water at a temperature of 70°C or lower under an acid condition of pH 5.0 or lower,
b) precipitating the zinc rich mineral component dissolved in the extract solution as insolubles, and
c) recovering the precipitated insolubles.

### DETAILED DESCRIPTION OF THE INVENTION

The cereal germs which can be used in the process of the present invention include the germs of rice, wheat, barley, soybean, corn, milo and sunflower. Wheat germ is preferably used from a viewpoint of easy availability of raw material, the content of Zn therein and the like. The shape of cereal germs is not limited in particular and any shape may be used including powders, crushed and rolled forms. Powders are preferable for easiness of treatment. Germ refers to a part of seed comprising an area participating in the germination, embyro (plumule, radicle), scutellum and septum, which occupies 2.5-3.5% of the dry seed. For instance, germ is 1.2% for bread wheat, 1.85% for barley, 1.15% for corn and 2-3% for rice.

We have paid paticular attention to zinc contained in cereal germs which is valuable as materials for nutriments and dietary supplements and found processes of extracting and recovering zinc efficiently. More specifically, it has been found that cereal germs are extracted with water at a temperature of 70°C or lower under an acid condition of pH 5.0 or lower, upon which Zn containing components contained in the cereal germs pass into the extract solution, and that the water solubility of the Zn containing components passed into the extract solution is sensitive to the pH or temperature, and lowers remarkably at pH of 6.0 or higher or at a temperature of 70-100°C, and thus said components can be separated as insolubles by precipitation from the extract solution. A reversible change in the water solubility of the Zn containing components in the extract solution within or out of the above pH range or the above temperature range is a notable behavior of the Zn containing component in cereal germs. By utilization of such behavior, the present invention is to carry out an efficient separation of zinc rich mineral components from cereal germs. In the extraction step (Step a) of the present invention, cereal germs are extracted with water at a temperature of 70°C or lower under the acid condition of pH 5.0 or lower. The temperature and pH conditions are critical in the present invention and it is essential that the pH is 5.0 or lower and the extraction temperature is 70°C or lower. At the pH of higher than 5.0, the Zn containing components are not dissolved in water. Even with the Zn containing components dissolved in water at the pH of 5.0 or lower, the water solubility lowers at a temperature of 70°C or higher and therefore said components do not pass into the extract solution, which results in no substantial extraction of the Zn containing components from cereal germs.

The treating temperature in the extraction step should not be higher than 70°C, and preferably ranges from room temperature to 50°C, taking into consideration the factors such as the speed of treatment, easiness of handling or the like. The pH condition should be an acid region of pH 5.0 or lower, preferably 3.5 to 5.0. The acids used for the pH adjustment can include mineral acids such as hydrochloric, sulfuric and phosphoric acids, organic acids such as acetic, propionic, butyric, oxalic, malonic, succinic, fumaric, maleic, malic, lactic, tartaric, citric and benzoic acids, and an acid water. The acid water refers to water producing at the anode by electrolysis of water in the presence of electrolytes such as dilute sulfuric acid and common salt. Edible acids such as citric and lactic acid are preferably used in view of the application of zinc rich mineral components.

In the extraction treatment of the present invention, cereal germs can be used as they are. In general, however, cereal germs contain a number of fat and oil components as a reserve nutrient, which are unnecessary components in the extraction treatment. Therefore, it is preferable to remove those components in advance. The cereal germs from which fat and oil components have been removed (what is called "defatted" cereal germs), are preferably used.

In addition to the fat and oil components, cereal germs contain other components such as starch, protein, hemicellulose or the like, which are also unnecessary in the treatment of the present invention. Therefore it is preferable to remove them, for example, by an enzyme treatment prior to the extraction treatment. For instance, an amylase treatment can be employed for the removal of starch, a protease treatment for the removal of protein and a cellulase treatment for the removal of hemicellulose. The enzyme treatments are preferably carried out under the condition usually employed in those treatments, i.e. at optimum temperature and pH of the enzyme.

The treatment for the removal of unnecessary components in the extraction can be carried out before or during the extraction step.

The step of precipitating as insolubles the zinc rich mineral components dissolved in the extract solution (Step b) utilizes the behavior of zinc rich mineral components at the pH and temperature at which said components in an aqueous solution causes the solubility to lower. More specifically, the precipitation step b is carried out by adjusting the pH of the extract solution to 6.0 or higher, preferably 7.5 to 9.0 or by heating the extract solution to a temperature of 70 to 100°C, or by adjusting the pH of the extract solution to 6.0 or higher, while heating the extract solution to a temperature of 70 to 100°C.

The pH and temperature conditions are critical in the present invention. If the pH is lower than 6.0 and the temperature is out of the above range, zinc rich mineral components may not precipitate as insolubles. For the pH adjustment in the precipitation step, a base such as sodium hydroxide and potassium hydroxide can be used.

By the treatment as mentioned above, zinc rich mineral components precipitate as insolubles. The precipitate can be recovered by a conventional method such as decantation, filtration or centrifugation.

The thus prepared zinc rich mineral components can be used as they are or in the form of the concentrate in a wide variety of uses including foods, beverages, favorite foods, medicines for preservation of health, medicines and dietary supplements. Those components can be processed into powders by drying them under the condition not causing the mineral components to modify. The drying can be carried out by known means such as spray drying and freeze drying.

The dry solids of zinc rich mineral components contain more than 500 ppm of zinc, are substantially tasteless and odorless, and very useful as a food material to fortify zinc.

The invention is further illustrated by the following examples.

### Example 1

250 kg of defatted wheat germ (manufactured by Nisshin Flour Milling Co., Ltd.) were dispersed in 2000 kg of water with stirring and the resultant dispersion was adjusted to pH 5.0 with 4 kg of citric acid. To the dispersion were added 1250 g of amylase (Liquid Enzyme T manufactured by Hankyu Bio Industries Co. Ltd.), and the mixture was heated to 85°C, kept at the same temperature for 10 minutes and cooled to 50°C. Then the mixture was reacted at 50°C for 14 hours with 1250 g of the amylase (Liquid Enzyme T) and 630 g of a protease (Protease M manufactured by Amano Pharmaceutical Co. Ltd). The enzymes were inactivated by treating the mixture at 90°C for 10 hours and then the mixture was cooled to 60°C. By this cooling, zinc containing components in the mixture were solubilized. Subsequently, the mixture was centrifuged to remove insolubles. To the supernatant was added an activated carbon, the mixture was stirred and filtered using diatomaceous earth as a filter aid and the filtrate was concentrated under reduced pressure. The resultant concentrate (Brix 35) was adjusted to pH 7.0 with caustic soda to form a precipitate. The resulting precipitate was recovered by the centrifuge and subjected to freeze-drying to obtain 3.85 kg of a dry solid product. The product was white, substantially tasteless and odorless. By the analysis of the product, the zinc content was found to be 4500 ppm.

### Example 2

Defatted wheat germ was treated in a similar manner as in Example 1, the concentrate of the resultant filtrate was heated to 90°C to form a precipitate and the precipitate was recovered through a filter while keeping a temperature of 80°C. The precipitate was dried under reduced pressure to obtain 10.5 kg of a dry solid product. The product was white, substantially tasteless and odorless. By the analysis of the product, the zinc content was found to be 1500 ppm.

### Example 3

125 kg of defatted wheat germ (manufactured by Nisshin Flour Milling Co., Ltd.) were dispersed in 1000 kg of water and the resultant dispersion was adjusted to pH 4.0 with 6 kg of lactic acid. The mixture was extracted for one hour while stirring at 30°C and subsequently centrifuged to remove insolubles. The resultant aqueous solution was adjusted to pH 7.5 with caustic soda to form a precipitate. The resulting precipitate was recovered by the centrifuge. The precipitate was paste, weighing 20 kg with the zinc content of 520 ppm.

### Comparative Example 1

125 kg of defatted wheat germ (manufactured by Nisshin Flour Milling Co., Ltd.) were dispersed in 1000 kg of water and the resultant dispersion was adjusted to pH 5.5 with 1 kg of lactic acid. The mixture was extracted for one hour while stirring at 30°C and subsequently centrifuged to remove insolubles. The resultant aqueous solution was adjusted to pH 7.5 with caustic soda to form a precipitate. The resulting precipitate was recovered by the centrifuge. The precipitate was paste, weighing 2.5 kg with the zinc content of 420 ppm. The recovery of zinc was found to be extremely low.

### Comparative Example 2

125 kg of defatted wheat germ (manufactured by Nisshin Flour Milling Co., Ltd.) were dispersed in 1000 kg of water and the resultant dispersion was adjusted to pH 4.0 with 6 kg of lactic acid. The mixture was extracted for one hour while stirring at 30°C and subsequently centrifuged to remove insolubles. The resultant aqueous solution was adjusted to pH 5.5 with caustic soda to form a precipitate. The precipitate was recovered by the centrifuge. However, the recovery of zinc was found to be extremely low.

## Claims

1. A process for the preparation of a zinc rich mineral component from a cereal germ which comprises the steps of:
a) extracting the cereal germ with water at a temperature of 70°C or lower under an acid condition of pH 5.0 or lower,
b) precipitating the zinc rich mineral component dissolved in the extract solution as insolubles, and
c) recovering the precipitated insolubles.

2. The process of Claim 1 wherein the precipitation in the step b) is carried out by adjusting the extract solution to pH 6.0 or higher.

3. The process of Claim 1 wherein the precipitation in the step b) is carried out by heating the extract solution to a temperature of 70 to 100°C.

4. The process of Claim 1 wherein a treatment of removing from the cereal germ unnecessary components in the extraction is carried out before or during the step a).

5. The process of Claim 4 wherein the treatment of removing from the cereal germ unnecessary components in the extraction is the treatment by an enzyme including amylase, protease or cellulase.

6. The process of Claim 1 wherein the cereal germs include the germs of rice, wheat, barley, soybean, corn, milo and sunflower.

7. A material for foods which comprises a zinc rich mineral component obtained by the process of Claim 1.

8. The material of Claim 7 wherein the foods include baby foods, enteral foods and dietary supplements.
